# EUROPEAN PATENT SPECIFICATION

(11) **EP 2 643 726 B1**
(45) Date of publication and mention of the grant of the patent: **19.05.2021**
(21) Application number: 10782610.9
(22) Date of filing: 25.11.2010
(51) Int. Cl.: G02B 6/44

(54) **OPTICAL BOX**
OPTISCHER KASTEN
BOÎTE OPTIQUE

(43) Date of publication of application: 02.10.2013
(73) Proprietor: Prysmian S.p.A., 20126 Milano (IT)
(72) Inventor: FERRARI, Alberto, 20126 Milano (IT); GRIFFITHS, Ian James, 20126 Milano (IT); LE DISSEZ, Arnaud, 20126 Milano (IT)
(74) Representative: Colombo, Stefano Paolo
(86) International application number: PCT/EP2010/068196
(87) International publication number: WO 2012/069084

(56) References cited:
- EP-A1- 1 621 907
- EP-A2- 2 159 617
- WO-A1-97/41469
- WO-A2-00/75706
- WO-A2-2009/126860
- WO-A2-2010/001155
- US-A- 5 913 006
- US-A1- 2009 317 047

## Description

### Technical field

The present invention relates to the field of apparatuses for the installation of optical access networks. In particular, the present invention relates to an optical box suitable for housing the optical connection between a first optical cable (for instance, but not exclusively, a cable of a transport optical network) and a second optical cable (for instance, but not exclusively, a riser cable of an optical access network).

### Background art

An FTTH ("Fiber To The Home") network is an optical access network providing a number of end users with broadband communication services, i.e. with services requiring data transmission at a rate of some hundreds of Mbit/s or more.

Typically, an FTTH network comprises a distribution cabinet which cooperates with a transport network (e.g. a metro core network) and which is typically located in the basement of a building where the end users reside. An optical cable, which will be termed herein after "riser cable", exits the distribution cabinet and vertically runs through the building from the basement up to all the building floors.

At the distribution cabinet, the riser cable is optically connected to an optical cable of the transport network, that will be termed herein after "transport cable". The optical connection between riser cable and transport cable is typically arranged in a suitable optical box, that will be termed herein after "distribution box".

At each floor of the building, the riser cable may be optically connected to one or more optical cables that will be termed herein after "drop cables". At each floor, the optical connection(s) between the riser cable and the drop cable(s) are typically arranged in a so-called "riser box".

Each drop cable is typically terminated at its far end by a respective termination box located within or in proximity of the apartment or office of an end user.

WO 2010/040256 describes a fiber optic terminal configured to make optical connections between optical fiber(s) provided by a network-side cable and a subscriber-side cable. The fiber optic terminal comprises a base, a cover hingedly affixed to the base and a transition panel disposed within the interior cavity of the base and rotatable relative to the base between a stowed position and a deployed position. In the stowed position, the transition panel divides the interior cavity of the base into a lower fiber management area and an upper fiber management area. The transition panel is provided with an adapter module containing or supporting a plurality of fiber optic adapters. One or more network-side fibers are provided in the lower management area of the base and spliced into respective input pigtails. Each input pigtail is routed around one or more fiber routing guides to the underside of the transition panel to an input fiber optic adapter of the adapter module. Further, one or more subscriber-side fibers are provided in the lower fiber management area of the base and spliced into respective output pigtails. Each output pigtail is routed around one or more fiber routing guides to the underside of the transition panel to an output fiber optical adapter of the adapter module. A technician then can close the transition panel to close off the lower fiber management area and make any optical connections desired in the upper fiber management area via optical connections using a coupling fiber or input and output fibers between the input and output fiber adapters.

In the fiber optic terminal of WO 2010/040256, both the input pigtails of the network-side fiber and the output pigtails of the subscriber-side fibers are fixed to a same side (i.e. the underside) of the transition panel. The upper side of the transition panel is used only for optically connecting input pigtails to respective output pigtails by means of coupling fibers. This does not allow a separate management of input pigtails and output pigtails, which separate management would ease the operations of handling and accessing the pigtails (and then the fibers).

Moreover, the input pigtails of the network-side fibers and the output pigtails of the subscriber-side fibers are individually routed from the lower fiber management area of the base to the underside of the transition panel, and their excess length is coiled in a dedicate area of the underside of the panel located next to the adapter module.

The individual routing of the pigtails disadvantageously leads to an unordered arrangement of the pigtails between the base and the underside of the transition panel. In particular, the coiled lengths of the pigtails may reciprocally overlap and, as a consequence, they may suffer mechanical stresses that induce undesired optical extra-losses. Moreover, the overlapping of the pigtails hampers the operations of accessing and handling the individual pigtails.

Further, the need to provide a dedicated area for coiling the excess length of the pigtails on the underside of the transition panel implies an increase of the panel size, and accordingly an increase of the size of the whole terminal
Publication EP 2 159 617 A2, discloses a further optical box of particular interest.

### Summary of the invention

In view of the above, the Applicant has tackled the problem of providing an optical box (by way of non limiting example, a distribution box or a riser box) suitable for housing an optical connection between a first optical cable and a second optical cable which overcomes the aforesaid drawbacks.

In particular, the Applicant has tackled the problem of providing an optical box suitable for housing an optical connection between a first optical cable and a second optical cable which is as compact as possible (so that it may be installed in very narrow spaces) and in which the fibers may be arranged in a well-ordered way, so that they suffer negligible mechanical stresses and may be easily accessed and handled.

According to embodiments of the present invention, such problems are solved by an optical box suitable for housing an optical connection between a first optical cable and a second optical cable, that comprises a base and a panel rotatably fixed to a sidewall of the base. The base comprises a bottom having a fiber receiving area suitable to receive an end of the first optical cable. The panel comprises an adapter module in turn comprising a number of optical fiber adapters providing optical connection between optical fibers of the first cable and optical fibers of the second cable, and a guiding element configured to route the optical fiber(s) of the first optical cable on the panel. The guiding element comprises a portion of a cylindrical surface having an axis parallel to the panel itself and also to the bottom of the base.

The guiding element according to the present invention substantially extends in a direction perpendicular to the panel itself, and accordingly exploits the depth of the box, thereby not requiring any increase of width or height of the box. Hence, the resulting box is advantageously very compact, and may be installed in very narrow spaces.

Further, since the routing path followed by the optical fibers of the first optical cable within the concavity of the guiding element is perpendicular to the panel itself, the optical fibers may be collected in a bundle and arranged all together in the guiding element, substantially without causing overlappings that would induce mechanical stresses on the fibers and that would reduce their accessibility by an operator.

According to a first aspect, the present invention provides an optical box suitable for housing an optical connection between a first optical cable and a second optical cable, the optical box comprising:
- a base comprising a bottom having a fiber receiving area suitable for receiving an end of the first cable; and
- a panel connected to the base, the panel comprising an adapter module in turn comprising a number of optical fiber adapters suitable for providing optical connection between optical fibers of said first cable and optical fibers of said second cable, and a guiding element configured to route at least one optical fiber of the first optical cable between a first area of the panel and a second area of the panel, the panel being rotatably fixed to a sidewall of the base,
wherein the guiding element comprises a portion of a cylindrical surface having an axis parallel to the panel and to the bottom of the base and wherein the panel has a first edge and a second opposite edge, the panel being connected to the base at the first edge, the guiding element being provided at the second opposite edge.

Preferably, the panel is rotatable between a closed position in which it covers at least partially the base and an open position in which it leaves free access to the base, the portion of the cylindrical surface forming a concavity which faces the base when the panel is rotated in the closed position.

Profitably, the panel comprises at least one fiber retaining element configured to retain the at least one optical fiber of the first optical cable close to the cylindrical surface.

More preferably, the panel has an opening and the adapter module removably engages the opening.

Preferably, each one of the optical fiber adapters has two opposite ends, the two opposite ends being accessible from opposite surfaces of the panel.

Profitably, the optical fiber adapters are tilted relative to the panel.

According to advantageous variants, the adapter module comprises at least one dividing wall, the at least one dividing wall being arranged parallel to the optical fiber adapters.

Preferably, the panel comprises a first guiding channel located next to the adapter module.

Preferably, the guiding element is configured to route the at least one optical fiber of the first optical cable between the first guiding channel and the adapter module.

Preferably, the base comprises a second guiding channel arranged in the fiber receiving area, the first guiding channel and the second guiding channel forming a continuous guiding path through the base and the panel.

Preferably, the second guiding channel is slanted so as to lift the at least one optical fiber of the first optical cable from the base to the panel.

Preferably, the base comprises a peripheral area encircling the fiber receiving area wherein a fixing tab is arranged, the fixing tab being suitable for fixing the first optical cable to the base.

### Brief description of the drawings

The present invention will become fully clear by reading the following detailed description, given by way of example and not of limitation, to be read by referring to the accompanying drawings, wherein:
- Figure 1 is a perspective view of an optical box according to a preferred embodiment of the present invention, with the panel in closed position;
- Figure 2 is a perspective view of the optical box of Figure 1, with the panel in open position;
- Figure 3 is a side view of the optical box of Figure 1, with the panel in closed position; and
- Figure 4 is a side view of the optical box of Figure 1, with the panel in open position.

### Detailed description of preferred embodiments of the invention

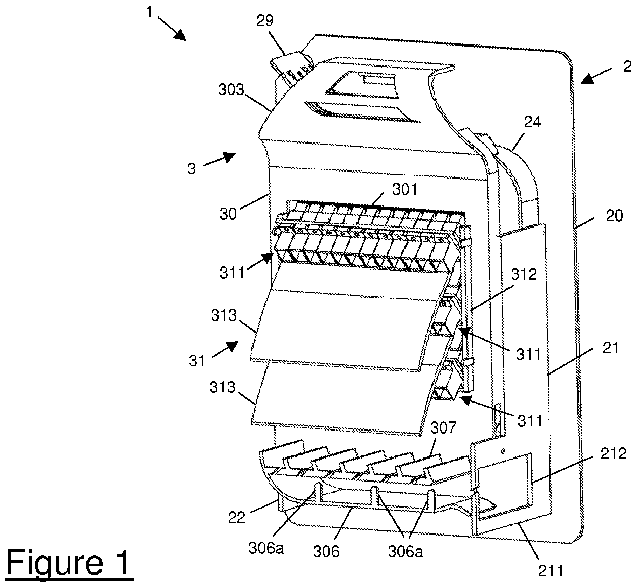

By referring to Figures 1 to 4, an optical box 1 according to a preferred embodiment of the present invention will be described in detail. The Figures are not in scale.

The optical box 1 is a distribution box suitable for housing the optical connection between a transport cable of a transport optical network and a riser cable of an access optical network.

The optical box 1 comprises a base 2 and a panel 3.

The base 2 comprises a bottom 20 and three sidewalls 21, 22 and 23.

The bottom 20 is substantially rectangular. The bottom 20 may have at least one hole (not shown in the drawings) suitable for allowing fixing of the base 2 to a vertical surface, e.g. a portion of a wall.

The sidewalls 21, 22 and 23 are substantially perpendicular to the bottom 20. Two sidewalls 21 and 22 are arranged parallel to the long opposite sides of the bottom 20, whereas the third sidewall 23 is arranged parallel to one of the short sides of the bottom 20, so that the third sidewall 23 is perpendicular to the sidewalls 21 and 22. The third sidewall 23 is preferably joined to the sidewalls 21, 22 at an intermediate position thereof (or, in other words, the sidewalls 21, 22 and 23 are arranged according to an "H" configuration). This way, the sidewalls 21, 22 and 23 basically define on the bottom 20 two adjacent areas: a larger fiber receiving area and a smaller panel receiving area.

The portion of one of the sidewalls parallel to the long sides of the bottom 20 (for instance, the sidewall 21 in the Figures) that delimits the panel receiving area preferably forms a projection 211 with a window 212.

The sidewalls 21, 22 and 23 are placed at a certain distance from the edges of the bottom 20, so that a peripheral area encircling the fiber receiving area and the panel receiving area is defined.

The base 2 comprises also an outer guiding wall 24 that, together with the sidewalls 21, 22 and 23, delimits the fiber receiving area. The outer guiding wall 24 preferably has an opening 25 suitable for allowing optical fibers passing from the peripheral area to the fiber receiving area. The outer guiding wall 24 may have straight portions and/or curved portions. The curved portions have a radius larger than a minimum bending radius that depends on the type of optical fiber received in the optical box 1. For optical fibers of the type defined by the ITU-T Recommendation G.657A1, the minimum bending radius that provides negligible bending losses is 20 mm.

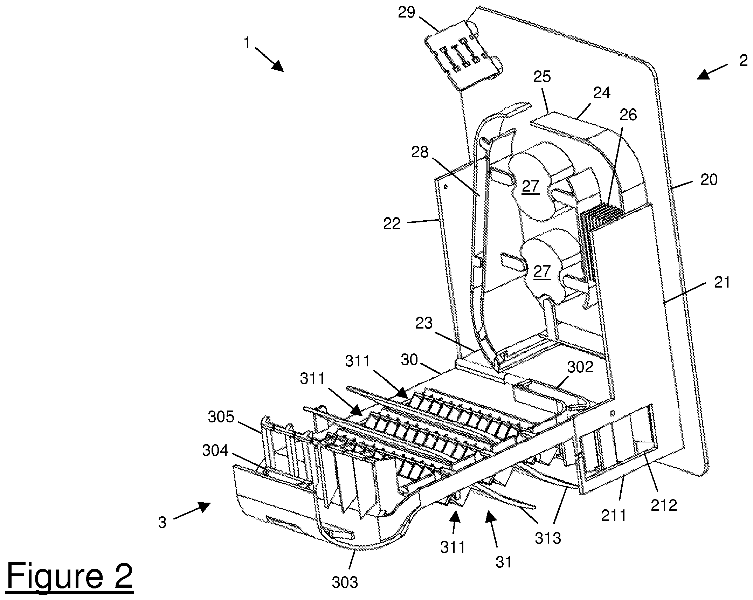

The base 2 may further comprise guiding elements arranged in the fiber receiving area delimited by the sidewalls 21, 22, 23 and the outer guiding wall 24. For instance, the base 2 may comprise a comb 26, one or ore mandrels 27, one or more protrusions forming guiding channels and retaining tabs suitable for preventing the optical fibers arranged in the fiber receiving area from drawing away from the bottom 20 when the base 2 is fixed to a vertical surface. One of the guiding channels formed in the fiber receiving area (indicated by the reference number 28 in Figure 2 and termed herein after "first guiding channel") is preferably slanted relative to the bottom 20 and basically acts as a slide that guides the optical fibers towards the panel 3 and, at the same time, gradually lifts them from surface of the bottom 20.

The base 2 also preferably comprises a fixing tab 29. The fixing tab 29 is arranged in the peripheral area of the bottom 20 close to the opening 25 of the outer guiding wall 24. The fixing tab 29 has at least two couples of holes suitable for receiving the ends of straps or cords, as it will be described in detail herein after. The fixing tab 29 may be removably fixed to the bottom 20, e.g. by means of threaded elements (screws, bolts or the like).

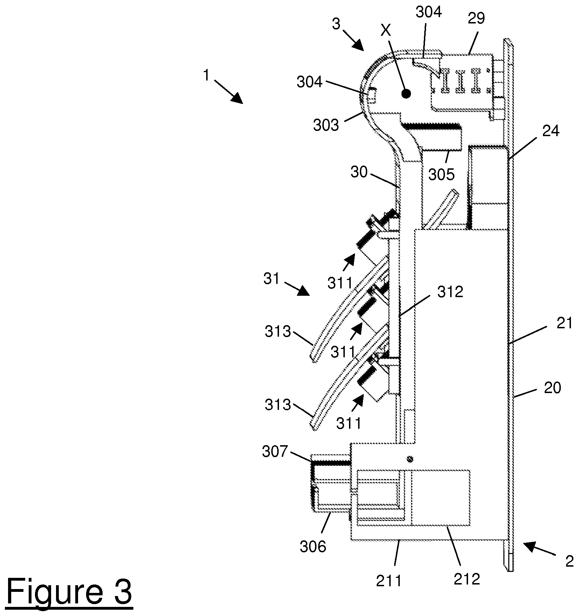

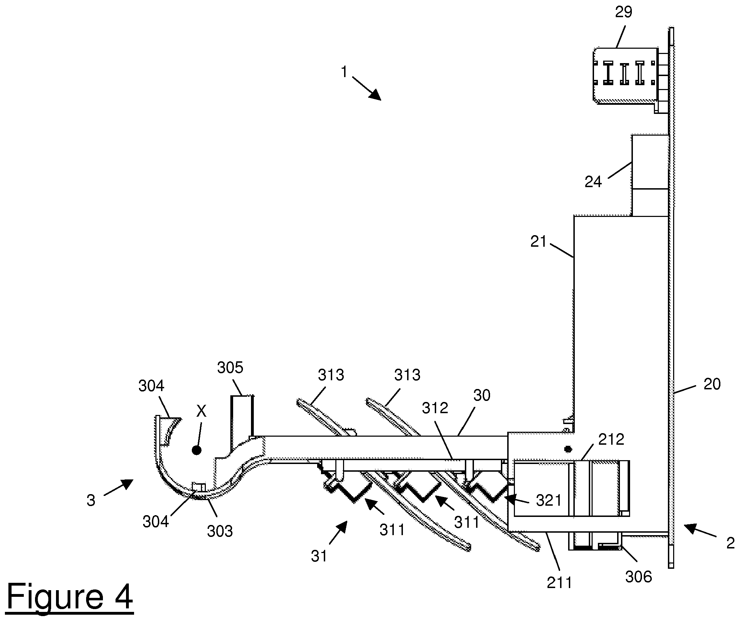

The panel 3 is hingedly fixed to the third sidewall 23 of the base 2. More specifically, the panel 3 is rotatable between a closed position (shown in Figures 1 and 3) and an open position (shown in Figures 2 and 4). When the panel 3 is in the closed position, it substantially covers the fiber receiving area of the base 2 enclosed by the sidewalls 21, 22 and 23 and the outer guiding wall 24. When the panel 3 is in the open position, it is rotated substantially by 90° relative to the base 2, thereby leaving free access to the fiber receiving area of the base 2.

The panel 3 comprises a plate 30 having a substantially rectangular shape. The plate 30 has two opposite surfaces: an inner surface (that faces the base 2 when the plate 3 is in the closed position) and outer surface (that faces away from the base 2 when the panel 3 is in the closed position).

The plate 30 has a central opening 301 having a substantially rectangular shape. On the inner surface, the plate 30 preferably has a second guiding channel 302. The second guiding channel 302 is preferably L-shaped with a rounded corner. The rounded corner has a radius larger than the minimum bending radius mentioned above. The second guiding channel 302 runs along the central opening 301 from the edge of the plate 30 hinged to the sidewall 23 to the opposite edge of the plate 30. The second guiding channel 302 is preferably provided with retaining tabs. When the panel 3 is in the closed position, the first guiding channel 28 of the base 2 and the second guiding channel 302 of the panel 3 basically form a U-shaped guiding path.

The edge of the plate 30 opposite to the hinged edge is curved so as to form a guiding element 303. The guiding element 303 comprises a portion of a cylindrical surface having its axis X parallel to the plate 30 (see Figures 3 and 4) and having its concavity on the inner surface of the plate 30. The guiding element 303 has a radius larger than the minimum bending radius described above.

The plate 30 also preferably comprises at least one retaining element 304 arranged in the concavity of the guiding element 303.

The plate 30 also preferably comprises a first separation element 305 arranged on the inner surface between the guiding element 303 and the central opening 301.

On the outer surface, the plate 30 preferably has a third guiding channel 306. The third guiding channel 306 projects externally to the hinged edge of the plate 30 and is parallel to it. The third guiding channel 306 is straight and has a curved end. The curved end has a radius larger than the minimum bending radius described above. The third guiding channel 306 preferably has retaining tabs 306a.

The plate 30 also preferably comprises a second separation element 307 arranged on the outer surface between the hinged edge and the third guiding channel 306.

The panel 3 also comprises an adapter module 31 configured to removably engage the central opening 301 of the plate 30.

The adapter module 31 comprises a number of optical fiber adapters 311 and a supporting frame 312 configured to support the optical fiber adapters 311. More specifically, the supporting frame 312 is rectangular, with shape and size which substantially match shape and size of the central opening 301 of the plate 30. The supporting frame 312 comprises fixing means (not shown in the Figures) configured to removably fix the supporting frame 312 to the edges of the central opening 301. The supporting frame 312 further comprises a number of slots configured to receive the optical fiber adapters 311. In the embodiment shown in the Figures, the supporting frame 312 comprises three slots, each slot being configured to receive a number of (by way of example, twelve) optical fiber adapters 311.

The optical fiber adapters 311 may be of any known type. Preferably, the optical fiber adapters 311 are of the SC-SC type. The optical fiber adapters 311 may be fixed to the supporting frame 312 e.g. by means of adhesive.

It is known that an optical fiber adapter has two opposite ends suitable for receiving the connectorized or pigtailed ends of two optical fibers, thereby providing an optical connection between the two optical fibers. The optical fiber adapters 311 are preferably fixed to the supporting frame 312 so that, when the supporting frame 312 engages the central opening 301 of the plate 30, their opposite ends project on the opposite surfaces (namely, the inner surface and the outer surface) of the plate 30.

The optical fiber adapters 311 are preferably tilted relative to the plate 30. In particular, a first end of the optical fiber adapters 311 projects on the inner surface of the plate 30 towards the first separation elements 305, whereas the opposite second end of the optical fiber adapters 311 projects on the outer surface of the plate 30 towards the second separation elements 307.

The adapter module 31 also preferably comprises one or more dividing walls 313 suitable for separating the various optical fiber adapters 311 supported by the supporting frame 312 and for protecting the connectors fitted in the optical fiber adapters 311 from bending and other mechanical stresses. Also the dividing walls 313 are preferably fixed to the supporting frame 312 so that, when the supporting frame 312 engages the central opening 301 of the plate 30, they project on both the opposite surfaces of the plate 30. Further, the dividing walls 313 are preferably arranged parallel to the optical fiber adapters 311, and are accordingly tilted relative to the plate 30.

Each one of the base 2, the plate 30 of the panel 3, the supporting frame 312 of the panel 3 and the cover is an integrally moulded piece made of a thermoplastic material. The thermoplastic material preferably comprises an ABS (Acrylonitrile butadiene styrene) polymer.

Preferably, the width of the optical box 1 is comprised from about 150 mm to 250 mm, and more preferably is equal to about 200 mm. Preferably, the height of the optical box 1 is comprised from about 240 mm to 340 mm, and more preferably is equal to about 290 mm. Preferably, the depth of the optical box 1 (measured when the panel 3 is in the closed position) is comprised from about 70 mm to 110 mm, and more preferably is equal to about 90 mm.

Herein after, an installation procedure of the optical box 1 will be described in detail.

It is assumed that the optical box 1 (that, as mentioned above, is a distribution box) shall be installed at the basement of a building for making optical connection between a transport cable of an optical transport network (e.g. a metro core network) and a riser cable of an optical access network (e.g. an FTTH network).

The transport cable comprises a number of optical fibers and the riser cable comprises the same number of optical fibers. Both in the transport cable and in the riser cable, the optical fibers may be arranged according to any known arrangement. For instance, the optical fibers may be loosely arranged in the cable sheath, or they may be grouped in ribbons, modules, micromodules, etc. The optical fibers comprised in the transport cable will be termed herein after "transport fibers", whereas the optical fibers comprised in the riser cable will be termed herein after "riser fibers".

Both the transport cable and the riser cable have an end that reaches the building basement. At these ends, each one of the transport fibers and the riser fibers has a length free from external sheaths, outer layers, etc.. Each transport fiber and each riser fiber is connectorized or pigtailed, i.e. it is spliced to a pigtail having a connector. All the connectors are suitable for being fitted into the optical fiber adapters 311 of the panel 3. If the optical fiber adapters 311 are SC-SC adapters, the connectors of the transport fibers and riser fibers are SC connectors.

For installing the riser box 1, the operator first of all fixes the base 2 of the optical box 1 (with the adapter 3 rotatably hinged thereto) to a vertical surface, such as for instance a portion of a wall in the building basement. The operator may fix the base 2 to the wall portion by means of screws, bolts or the like. The base 2 is fixed with the sidewall 23 facing downwards. The panel 3 is firstly brought into the open position.

The connectorized riser fibers are collected in a single bundle, which is then leaned on the base 2 and fixed to the fixing tab 29 by means e.g. of one or more straps. The straps are passed around the bundle of riser fibers and their ends are inserted in the holes of the fixing tabs 29 and firmly joined. This way, the bundle of riser fibers is firmly held against the surface of the retaining tab 29. Instead of the straps, cords or similar may be used to this purpose.

The bundle of riser fibers is then brought through the opening 25 to the fiber receiving area of the base 2, in which the riser fibers may be arranged. The guiding elements of the fiber receiving area (i.e. the comb 26, the mandrels 27 and the guiding channels) allow arranging the riser fibers in a well-ordered way, thereby minimizing overlapping between riser fibers.

The bundle of connectorized riser fibers is then brought from the fiber receiving area of the base 2 to the inner surface of the panel 3. In particular, the bundle of riser fibers is arranged in the first guiding channel 28, that guides it towards the hinged edge of the panel 3 and at the same time lifts it from the bottom 20. Then, the bundle of riser fibers is arranged in the second guiding channel 302, so that the bundle is brought from the edge of the panel 3 hinged to the base 2 to the opposite edge that forms the guiding element 303. The bundle of riser fibers is firmly kept in the second guiding channel 302 by the retaining tabs of the second guiding channel 302.

Then, the bundle of riser fibers is bent and arranged in the guiding element 303. In particular, the bundle of riser fibers is bent by an angle of about 180° about the axis X parallel to the inner surface of the plate 30 and arranged in the concavity of the guiding element 303. In the concavity of the guiding element 303, the riser fibers may be passed under the retaining elements 304, that force the riser fibers to follow the concave profile of the guiding element 303, thereby preventing them from being bent by a radius narrower than the above described minimum bending radius.

The bundle of riser fibers may then be split by passing the riser fibers through the first separation element 305. The connectors of the various riser fibers may then be fitted into the ends of the optical fiber adapters 311 that project on the inner surface of the plate 30.

The operator may then rotate the panel 3 from the open position to the closed position.

Also the connectorized transport fibers are collected in a single bundle, which is then leaned on the base 2. In particular, the bundle of transport fibers may be arranged in the peripheral area of the bottom 20, i.e. externally to the sidewalls 21, 22, 23. Even more in particular, the bundle of transport fibers is arranged along the sidewall 21, and then passed through the window 212 of the protrusion 211 of the sidewall 21.

The bundle of transport fibers is then arranged in the third guiding channel 306 of the panel 3. The bundle of transport fibers is firmly kept in the second guiding channel 306 by the retaining tabs 306a.

The bundle of transport fibers may then be split by passing the transport fibers through the second separation element 307. The connectors of the various transport fibers may then be fitted into the ends of the optical fiber adapters 311 that project on the outer surface of the plate 30. This way, each transport fiber is optically connected to a respective riser fiber.

The optical box 1 has a number of advantages.

First of all, the optical box 1 is advantageously very compact. In fact, while a guiding element (such as e.g. a mandrel) that allows to coil the optical fibers so that they lie on the surface of the panel would require an increase of width and/or height of the panel 3, the guiding element 303 substantially extends in a direction perpendicular to the panel 3 itself, and accordingly exploits the depth of the box 1. As shown in Figure 3, the depth of the guiding element 303 (that depends on the minimum bending radius) is much smaller than the depth of the other elements of the box, in particular of the adapter module 31. Hence, the guiding element 303 may be provided in the box 1 without the need of increasing its size. The optical box 1 is accordingly very compact, and may be installed in very narrow spaces.

Further, since the routing path followed by the riser fibers within the concavity of the guiding element 303 is perpendicular to the panel 3 itself, the riser fibers may be collected in a bundle and arranged all together in the guiding element 303, substantially without causing overlappings that would induce mechanical stresses on the riser fibers and that would reduce their accessibility by the operator.

Further, the transport fibers and riser fibers lie on opposite surfaces of the plate 30. Accordingly, the riser fibers and the transport fibers may be separately managed. This further eases the operations of accessing and handling the fibers.

In the above detailed description, reference has been made to a distribution box. However, more generally, the principle of providing a panel with a guiding element comprising a portion of a cylindrical surface having its axis parallel to the surface of the panel may be applied to other types of optical boxes, such as for instance the riser boxes that house optical connections between riser cable and drop cable(s).

## Claims

1. An optical box (1) suitable for housing an optical connection between a first optical cable and a second optical cable, said optical box (1) comprising
- a base (2) comprising a bottom (20) having a fiber receiving area suitable for receiving an end of said first cable; and
- a panel (3) connected to said base (2), said panel (3) comprising an adapter module (31) in turn comprising a number of optical fiber adapters (311) suitable for providing optical connection between optical fibers of said first cable and optical fibers of said second cable, and a guiding element (303) configured to route at least one optical fiber of said first optical cable between a first area of said panel (3) and a second area of said panel (3), said panel (3) being rotatably fixed to a sidewall (23) of said base (2),
wherein said guiding element (303) comprises a portion of a cylindrical surface having an axis (X) parallel to said panel (3) and to said bottom (20) of said base (2) and wherein said panel (3) has a first edge and a second opposite edge, said panel (3) being connected to said base (2) at said first edge, said guiding element (303) being provided at said second opposite edge.

2. The optical box (1) according to claim 1, wherein said panel (3) is rotatable between a closed position in which it covers at least partially said base (2) and an open position in which it leaves free access to said base (2), said portion of said cylindrical surface forming a concavity which faces said base (2) when said panel (3) is rotated in said closed position.

3. The optical box (1) according to any of the preceding claims, wherein said panel (3) comprises at least one fiber retaining element (304) configured to retain said at least one optical fiber of said first optical cable close to said cylindrical surface.

4. The optical box (1) according to claim 1, wherein said panel (3) has an opening (301), wherein said adapter module (31) removably engages said opening (301).

5. The optical box (1) according to claim 1 or 4, wherein each one of said optical fiber adapters (311) has two opposite ends, said two opposite ends being accessible from opposite surfaces of said panel (3).

6. The optical box (1) according to any of the preceding claims, wherein said optical fiber adapters (311) are tilted relative to said panel (3).

7. The optical box (1) according to any of the preceding claims, wherein said adapter module (31) comprises at least one dividing wall (313), said at least one dividing wall (313) being arranged parallel to said optical fiber adapters (311).

8. The optical box (1) according to any of the preceding claims, wherein said panel (3) comprises a first guiding channel (302) located next to said adapter module (31).

9. The optical box (1) according to claim 8, wherein said guiding element (303) is configured to route said at least one optical fiber of said first optical cable between said first guiding channel (302) and said adapter module (31).

10. The optical box (1) according to claim 9, wherein said base (2) comprises a second guiding channel (28) arranged in said fiber receiving area, said first guiding channel (302) and said second guiding channel (28) forming a continuous guiding path through said base (2) and said panel (3).

11. The optical box (1) according to claim 10, wherein said second guiding channel (28) is slanted so as to lift said at least one optical fiber of said first optical cable from said base (2) to said panel (3).

12. The optical box (1) according to any of the preceding claims, wherein said base (2) comprises a peripheral area encircling said fiber receiving area, wherein a fixing tab (29) is arranged, said fixing tab (29) being suitable for fixing said first optical cable to said base (2).

## Patentansprüche

1. Optischer Kasten (1), der zur Aufnahme einer optischen Verbindung zwischen einem ersten optischen Kabel und einem zweiten optischen Kabel geeignet ist, wobei der optische Kasten (1) umfasst:
- Eine Basis (2), die einen Boden (20) mit einem Faseraufnahmebereich, der zur Aufnahme eines Endes des ersten Kabels geeignet ist; und
- eine Platte (3), die mit der Basis (2) verbunden ist, wobei die Platte (3) ein Adaptermodul (31) umfasst, das seinerseits eine Anzahl von optischen Faseradaptern (311) umfasst, die geeignet sind, eine optische Verbindung zwischen optischen Fasern des ersten Kabels und optischen Fasern des zweiten Kabels herzustellen und ein Führungselement (303), das so konfiguriert ist, dass es mindestens eine optische Faser des ersten optischen Kabels zwischen einem ersten Bereich der Platte (3) und einem zweiten Bereich der Platte (3) leitet, wobei die Platte (3) drehbar an einer Seitenwand (23) der Basis (2) befestigt ist,
wobei das Führungselement (303) einen Abschnitt einer zylindrischen Oberfläche mit einer Achse (X) parallel zu der Platte (3) und zu dem Boden (20) der Basis (2) aufweist und wobei die Platte (3) eine erste Kante und eine zweite gegenüberliegende Kante aufweist, wobei die Platte (3) mit der Basis (2) an der ersten Kante verbunden ist, wobei das Führungselement (303) an der zweiten gegenüberliegenden Kante vorgesehen ist.

2. Optischer Kasten (1) nach Anspruch 1, wobei die Platte (3) zwischen einer geschlossenen Position, in der sie die Basis (2) zumindest teilweise bedeckt, und einer offenen Position, in der sie einen freien Zugang zu der Basis (2) lässt, drehbar ist, wobei der Abschnitt der zylindrischen Oberfläche eine Konkavität bildet, die der Basis (2) zugewandt ist, wenn die Platte (3) in die geschlossene Position gedreht wird.

3. Optischer Kasten (1) nach einem der vorhergehenden Ansprüche, wobei die Platte (3) mindestens ein Faserhalteelement (304) umfasst, das so konfiguriert ist, dass es die mindestens eine optische Faser des ersten optischen Kabels in der Nähe der zylindrischen Oberfläche festhält.

4. Optischer Kasten (1) nach Anspruch 1, wobei die Platte (3) eine Öffnung (301) aufweist, in die das Adaptermodul (31) die eine Öffnung (301) lösbar eingreift.

5. Optischer Kasten (1) nach Anspruch 1 oder 4, wobei jeder der optischen Faseradapter (311) zwei gegenüberliegende Enden aufweist, wobei die beiden gegenüberliegenden Enden von gegenüberliegenden Oberflächen der Platte (3) zugänglich sind.

6. Optischer Kasten (1) nach einem der vorhergehenden Ansprüche, wobei die Lichtwellenleiteradapter (311) relativ zu der Platte (3) geneigt sind.

7. Optischer Kasten (1) nach einem der vorhergehenden Ansprüche, wobei das Adaptermodul (31) mindestens eine Trennwand (313) aufweist, wobei die mindestens eine Trennwand (313) parallel zu den Lichtwellenleiteradaptern (311) angeordnet ist.

8. Optischer Kasten (1) nach einem der vorhergehenden Ansprüche, wobei die Platte (3) einen ersten Führungskanal (302) aufweist, der neben dem Adaptermodul (31) angeordnet ist.

9. Optischer Kasten (1) nach Anspruch 8, wobei das Führungselement (303) so konfiguriert ist, dass es die mindestens eine optische Faser des ersten optischen Kabels zwischen dem ersten Führungskanal (302) und dem Adaptermodul (31) leitet.

10. Optischer Kasten (1) nach Anspruch 9, wobei die Basis (2) einen zweiten Führungskanal (28) aufweist, der in dem Faseraufnahmebereich angeordnet ist, wobei der erste Führungskanal (302) und der zweite Führungskanal (28) einen durchgehenden Führungsweg durch die Basis (2) und die Platte (3) bilden.

11. Optischer Kasten (1) nach Anspruch 10, wobei der zweite Führungskanal (28) so geneigt ist, dass er die mindestens eine optische Faser des ersten optischen Kabels von der Basis (2) zu der Platte (3) anhebt.

12. Optischer Kasten (1) nach einem der vorhergehenden Ansprüche, wobei die Basis (2) einen Umfangsbereich aufweist, der den Faseraufnahmebereich umgibt, in dem eine Befestigungslasche (29) angeordnet ist, wobei die Befestigungslasche (29) zum Befestigen des ersten optischen Kabels an der Basis (2) geeignet ist.

## Revendications

1. Boîte optique (1) adaptée pour loger une connexion optique entre un premier câble optique et un second câble optique, ladite boîte optique (1) comprenant
- une base (2) comprenant un fond (20) ayant une zone de réception de fibre adaptée pour recevoir une extrémité dudit premier câble ; et
- un panneau (3) connecté à ladite base (2), ledit panneau (3) comprenant un module adaptateur (31) comprenant à son tour un certain nombre d'adaptateurs de fibres optiques (311) adaptés pour fournir une connexion optique entre des fibres optiques dudit premier câble et des fibres optiques dudit second câble, et un élément de guidage (303) configuré pour acheminer au moins une fibre optique dudit premier câble optique entre une première zone dudit panneau (3) et une seconde zone dudit panneau (3), ledit panneau (3) étant fixé en rotation à une paroi latérale (23) de ladite base (2),
dans laquelle ledit élément de guidage (303) comprend une partie d'une surface cylindrique ayant un axe (X) parallèle audit panneau (3) et audit fond (20) de ladite base (2) et dans laquelle ledit panneau (3) a un premier bord et un second bord opposé, ledit panneau (3) étant connecté à ladite base (2) au niveau dudit premier bord, ledit élément de guidage (303) étant fourni au niveau dudit second bord opposé.

2. Boîte optique (1) selon la revendication 1, dans laquelle ledit panneau (3) peut tourner entre une position fermée dans laquelle il recouvre au moins partiellement ladite base (2) et une position ouverte dans laquelle il laisse libre accès à ladite base (2), ladite partie de ladite surface cylindrique formant une concavité qui fait face à ladite base (2) lorsque ledit panneau (3) est mis en rotation dans ladite position fermée.

3. Boîte optique (1) selon l'une quelconque des revendications précédentes, dans laquelle ledit panneau (3) comprend au moins un élément de retenue de fibre (304) configuré pour retenir ladite au moins une fibre optique dudit premier câble optique à proximité de ladite surface cylindrique.

4. Boîte optique (1) selon la revendication 1, dans laquelle ledit panneau (3) présente une ouverture (301), dans laquelle ledit module adaptateur (31) s'engage de manière amovible dans ladite ouverture (301) .

5. Boîte optique (1) selon la revendication 1 ou 4, dans laquelle chacun desdits adaptateurs de fibres optiques (311) a deux extrémités opposées, lesdites deux extrémités opposées étant accessibles depuis des surfaces opposées dudit panneau (3).

6. Boîte optique (1) selon l'une quelconque des revendications précédentes, dans laquelle lesdits adaptateurs de fibres optiques (311) sont inclinés par rapport audit panneau (3).

7. Boîte optique (1) selon l'une quelconque des revendications précédentes, dans laquelle ledit module adaptateur (31) comprend au moins une paroi de séparation (313), ladite au moins une paroi de séparation (313) étant agencée parallèlement auxdits adaptateurs de fibres optiques (311).

8. Boîte optique (1) selon l'une quelconque des revendications précédentes, dans laquelle ledit panneau (3) comprend un premier canal de guidage (302) situé à côté dudit module adaptateur (31).

9. Boîte optique (1) selon la revendication 8, dans laquelle ledit élément de guidage (303) est configuré pour acheminer ladite au moins une fibre optique dudit premier câble optique entre ledit premier canal de guidage (302) et ledit module adaptateur (31).

10. Boîte optique (1) selon la revendication 9, dans laquelle ladite base (2) comprend un second canal de guidage (28) agencé dans ladite zone de réception de fibre, ledit premier canal de guidage (302) et ledit second canal de guidage (28) formant un chemin de guidage continu à travers ladite base (2) et ledit panneau (3).

11. Boîte optique (1) selon la revendication 10, dans laquelle ledit second canal de guidage (28) est incliné de manière à soulever ladite au moins une fibre optique dudit premier câble optique de ladite base (2) audit panneau (3).

12. Boîte optique (1) selon l'une quelconque des revendications précédentes, dans laquelle ladite base (2) comprend une zone périphérique entourant ladite zone de réception de fibre, dans laquelle une patte de fixation (29) est agencée, ladite patte de fixation (29) étant appropriée pour fixer ledit premier câble optique à ladite base (2).
